# EUROPEAN PATENT APPLICATION

(11) **EP 4 644 149 A1**
(43) Date of publication of application: **05.11.2025**
(21) Application number: 23911265.9
(22) Date of filing: 30.08.2023
(51) Int. Cl.: B60K 1/04, B60L 15/20, B60L 50/60, B60L 58/10, H01R 13/639

(54) **ELECTRIC WORK VEHICLE**

(30) Priority: 27.12.2022 JP 2022210896
(71) Applicant: Kubota Corporation, Osaka 556-8601 (JP)
(72) Inventor: MIYAZAKI Daisuke, Sakai-shi, Osaka 590-0908 (JP); IMAIZUMI Makoto, Sakai-shi, Osaka 590-0908 (JP)
(74) Representative: Schlegel, Sebastian
(86) International application number: PCT/JP2023/031368
(87) International publication number: WO 2024/142481

(57) **Abstract**

An electric work vehicle includes a harness 52 configured to supply power from a battery to a motor 15 and a connector 54 provided at an end portion of the harness 52 and connected to the motor 15. The electric work vehicle includes a lock member 59 artificially operable between a retaining position A1 at which the lock member retains connection between the connector 54 and the motor 15 and a release position A2 at which the lock member allows the connector 54 to be separated from the motor 15. The electric work vehicle includes a restriction member 60 provided on an operation path of the lock member 59 between the retaining position A1 and the release position A2 to hinder the lock member 59 from being operated from the retaining position A1 to the release position A2, and the restriction member 60 is removable. (Fig. 13)

## Description

### Technical Field

The present invention relates to an electric work vehicle including a travel device configured to be driven by a motor.

### Background Art

Electric work vehicles include an electric work vehicle in which a battery is supported by a main frame and a motor that drives a travel device is provided below the battery and supported by the main frame as disclosed in Patent Document 1, for example.

**In** Patent Document 1, the battery is covered by a hood. The motor is below a lower end portion of the hood in a side view and located outside the hood.

**In** an electric work vehicle, a lock member may be provided for a connector of a harness to which power is supplied from the battery.

After the connector of the harness is connected to the motor, it is possible to prevent the connector of the harness from coming off the motor by operating the lock member to a retaining position. It is possible to take off the connector of the harness from the motor by operating the lock member to a release position.

### Prior Art Document

Patent Document 1 : JP 2021-957A

### Disclosure of the Invention

### Problem to be Solved by the Invention

If the electric work vehicle disclosed in Patent Document 1 travels on uneven ground, a branch of a plant or the like may come into contact with the vicinity of the motor, and there is a concern that, if the branch of a plant or the like comes into contact with the lock member, the lock member may be operated from the retaining position to the release position. There is also a concern that the lock member may gradually move from the retaining position to the release position due to vibrations during travel.

An object of the present invention is to prevent a lock member provided for a connector of a harness connected to a motor of an electric work vehicle from being operated to a release position.

### Means for Solving Problem

An electric work vehicle according to the present invention includes: a hood housing a battery; a motor outside the hood; a travel device configured to be driven by the motor; a harness configured to supply power from the battery to the motor; a connector provided at an end portion of the harness and connected to the motor; a lock member artificially operable between a retaining position at which the lock member retains connection between the connector and the motor and a release position at which the lock member allows the connector to be separated from the motor; and a restriction member provided on an operation path of the lock member between the retaining position and the release position to hinder the lock member from being operated from the retaining position to the release position, wherein the restriction member is removable.

According to the present invention, a worker can connect the connector of the harness to the motor, operate the lock member to the retaining position, and then attach the restriction member on the operation path of the lock member.

In this case, even if the lock member moves from the retaining position toward the release position, the lock member comes into contact with the restriction member and the movement of the lock member is blocked, and accordingly, the lock member cannot reach the release position.

According to the present invention, it is possible to prevent the lock member from being operated from the retaining position to the release position due to a branch of a plant or the like coming into contact with the lock member during travel, and to prevent the lock member from gradually moving from the retaining position to the release position due to vibrations during travel, and accordingly, it is possible to prevent the connector of the harness from coming off the motor.

According to the present invention, when the worker removes the connector of the harness from the motor for maintenance or the like, the worker can operate the lock member from the retaining position to the release position by removing the restriction member. Therefore, the worker can remove the connector of the harness from the motor without difficulty, and the maintenance or the like can be carried out without hindrance.

It is preferable that the electric work vehicle according to the present invention includes a fixing member for attaching the restriction member, and the restriction member is removable by removing the fixing member with a tool.

According to this invention, the restriction member is attached with use of the fixing member, and therefore, the restriction member can be firmly attached.

When the worker removes the connector of the harness from the motor for maintenance or the like, the worker can remove the restriction member by removing the fixing member with the tool, and the maintenance or the like can be carried out without hindrance.

In the present invention, it is preferable that the release position is set to a position spaced apart from the connector further than the retaining position is.

According to this invention, the release position of the lock member is set to a position spaced apart from the connector of the harness further than the retaining position is, and the lock member operated to the release position extends outward from the connector of the harness, and therefore, it is easy for the worker to notice that the lock member has been operated to the release position.

Since it is easy for the worker to notice that the lock member has been operated to the release position, the worker can be kept from forgetting to attach the restriction member.

The "release position of the lock member being set to a position spaced apart from the connector of the harness further than the retaining position is" means that the retaining position is set to a position closer to the connector of the harness.

Accordingly, the restriction member can also be provided at a position close to the connector of the harness, and therefore, according to this invention, it is possible to save the space occupied by the connector of the harness, the lock member operated to the retaining position, and the restriction member.

Since the lock member operated to the retaining position is close to the connector of the harness, the lock member operated to the retaining position does not extend outward from the connector of the harness and a branch of a plant or the like is less likely to come into contact with the lock member, and this is advantageous in preventing the lock member from being operated from the retaining position to the release position.

In the present invention, it is preferable that the restriction member extends across an entire width of the lock member operated to the retaining position.

According to this invention, the restriction member extends across the entire width of the lock member operated to the retaining position, and therefore, when the lock member moves from the retaining position toward the release position, the restriction member comes into contact with a large area of the lock member, and the movement of the lock member toward the release position can be stably blocked by the restriction member. This is advantageous in preventing the lock member from being operated from the retaining position to the release position.

In the present invention, it is preferable that the restriction member includes a first portion extending along a horizontal direction and a pair of second portions extending in the same direction that is an upward direction or a downward direction from an end portion and another end portion of the first portion, the first portion is located above or below the connector, and the second portions are located laterally outward of the connector.

According to this invention, the restriction member surrounds the connector of the harness and the lock member, and the movement of the lock member toward the release position can be stably blocked by the restriction member, and this is advantageous in preventing the lock member from being operated from the retaining position to the release position.

It is preferable that the electric work vehicle according to the present invention includes a cover that is provided under the harness and the connector and covers the harness and the connector, the lock member is located above the connector, the first portion is located above the connector, and lower portions of the second portions are attached to the cover.

According to this invention, the harness and the connector are covered by the cover from below, and therefore, flying gravel and the like can be kept from hitting the harness and the connector.

According to this invention, the lock member is located above the connector of the harness. In the restriction member including the first portion and the second portions as described above, the first portion is located above the connector of the harness, and the lower portions of the second portions are attached to the cover.

The cover covering the harness and the connector from below is effectively used to attach the restriction member, and the cover has both a function of protecting the harness and the connector and a function of supporting the restriction member, and therefore, the structure can be simplified due to the cover having the plurality of functions.

In the present invention, it is preferable that the cover includes an opening for cleaning and inspection, the opening is closed with a covering attached to the cover, and the covering is removable from the cover.

According to this invention, it is possible to visually inspect the harness and the connector through the opening in the cover by removing the covering. Even if soil or the like accumulates on the cover, it is possible to take off the soil or the like that has accumulated on the cover from the opening in the cover by removing the covering.

It is preferable that the electric work vehicle according to the present invention includes left and right main frames extending along a front-rear direction, the connector and the lock member are between the left and right main frames and overlap the left and right main frames in a side view, and the restriction member is attached in such a manner as to extend between the left and right main frames.

According to this invention, when the harness and the connector are disposed between the right and left main frames, the restriction member is attached in such a manner as to extend between the right and left main frames, and accordingly, the main frames have a function of supporting the restriction member, and the structure can be simplified due to the main frames having a plurality of functions.

### Brief Description of the Drawings

- FIG. 1: is a left side view of a tractor.
- FIG. 2: is a plan view of the tractor.
- FIG. 3: is a schematic diagram showing a transmission system for transmission from a motor to front wheels and rear wheels.
- FIG. 4: is a left side view showing the inside of a hood.
- FIG. 5: is a left side view showing the vicinity of an inverter and the motor.
- FIG. 6: is a front view of a vertical cross section showing the vicinity of a support frame and the inverter.
- FIG. 7: is a front view of a vertical cross section showing the vicinity of the motor.
- FIG. 8: is an exploded perspective view of the support frame and the motor.
- FIG. 9: is a plan view of the support frame.
- FIG. 10: is a left side view of the support frame.
- FIG. 11: is a front view of the support frame.
- FIG. 12: is a plan view showing the vicinity of a terminal of the motor, a connector, and a restriction member.
- FIG. 13: is a left side view of a vertical cross section showing the vicinity of the terminal of the motor, the connector, and the restriction member.
- FIG. 14: is a left side view of a vertical cross section showing the vicinity of the terminal of the motor, the connector, and the restriction member in a sixth variation of the invention.

### Means for Solving Problem

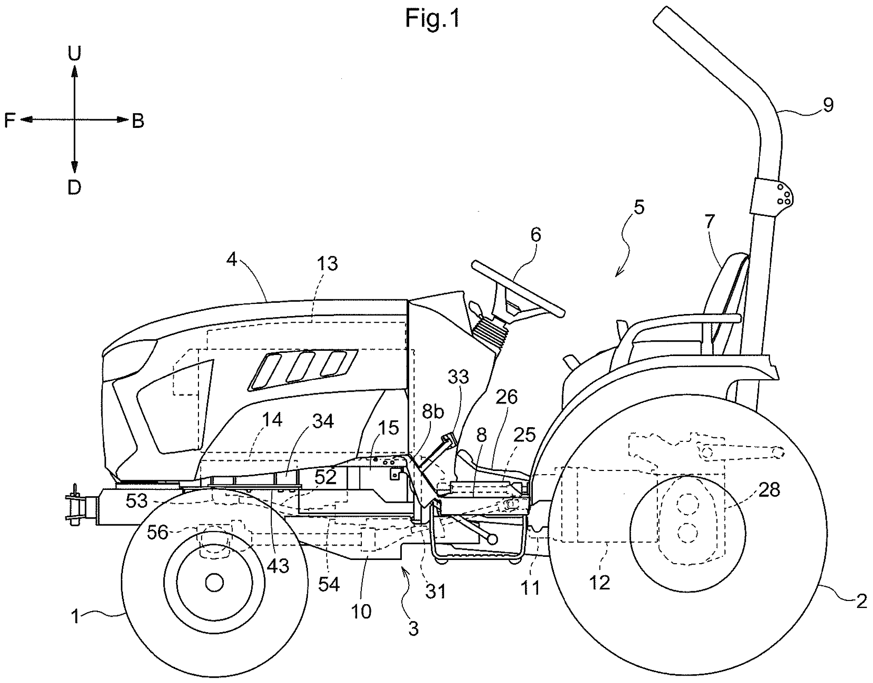

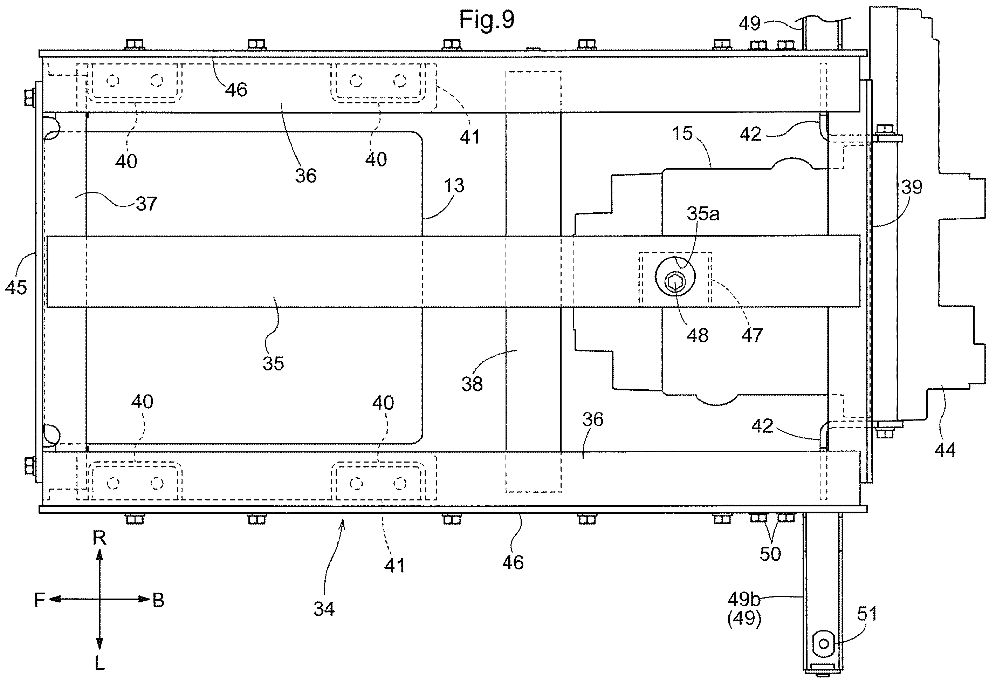

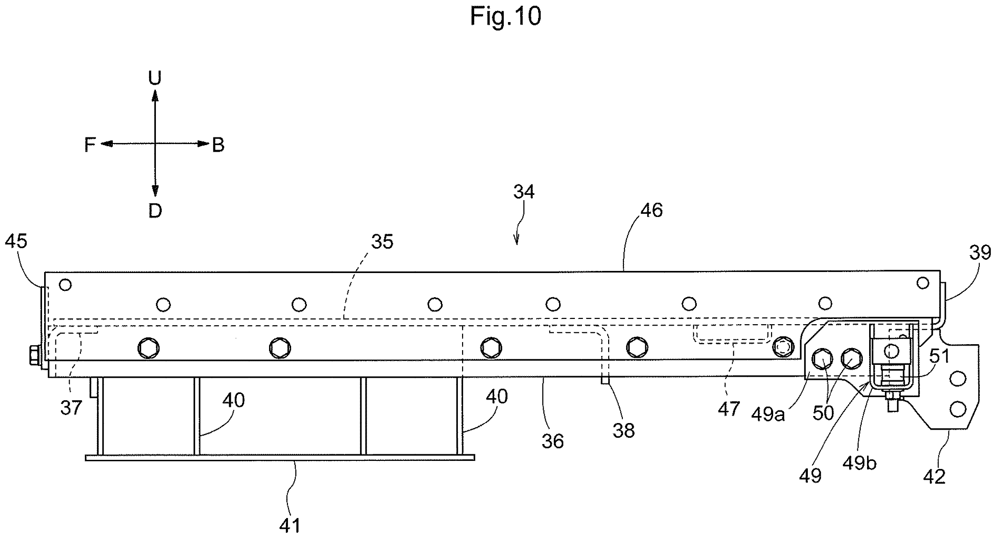

FIGS. 1 to 14 show a tractor that is an example of an electric work vehicle. In FIGS. 1 to 14, F indicates the forward direction, B indicates the backward direction, U indicates the upward direction, D indicates the downward direction, R indicates the rightward direction, and L indicates the leftward direction.

### (Overall Configuration of Tractor)

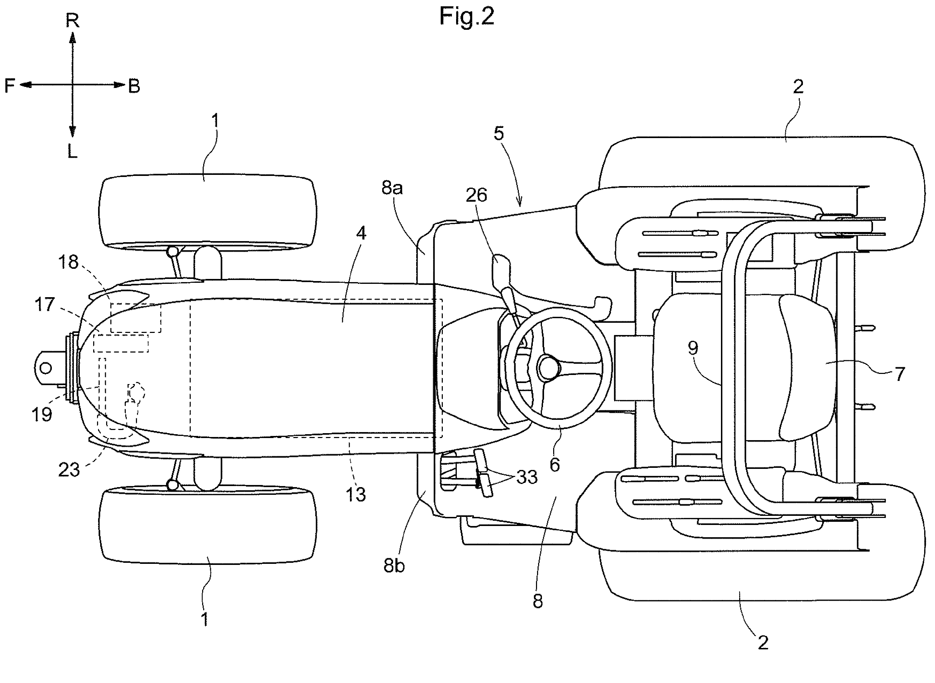

As shown in FIGS. 1 and 2, a body 3 is supported by right and left front wheels 1 (corresponding to a travel device) and right and left rear wheels 2 (corresponding to a travel device). A hood 4 is provided in a front portion of the body 3, and a driving section 5 is provided in a rear portion of the body 3. A steering wheel 6 for steering the front wheels 1, a driver's seat 7, a floor section 8, and a ROPS frame 9 are provided in the driving section 5.

The body 3 includes right and left main frames 10, a continuously variable transmission case 11, a transmission case 12, and the like. The continuously variable transmission case 11 is couped to a front portion of the transmission case 12, and the right and left main frames 10 are coupled to the continuously variable transmission case 11 and the transmission case 12 and extend along the front-rear direction. The front wheels 1 are supported by the main frames 10, and the rear wheels 2 are supported by the transmission case 12.

With this configuration, the tractor includes the front wheels 1 (travel device), the rear wheels 2 (travel device), and the main frames 10 supporting the front wheels 1 (travel device).

### (Configuration of Front Portion of Body)

As shown in FIG. 1, a battery 13, an inverter 14, and a motor 15 are supported by the main frames 10.

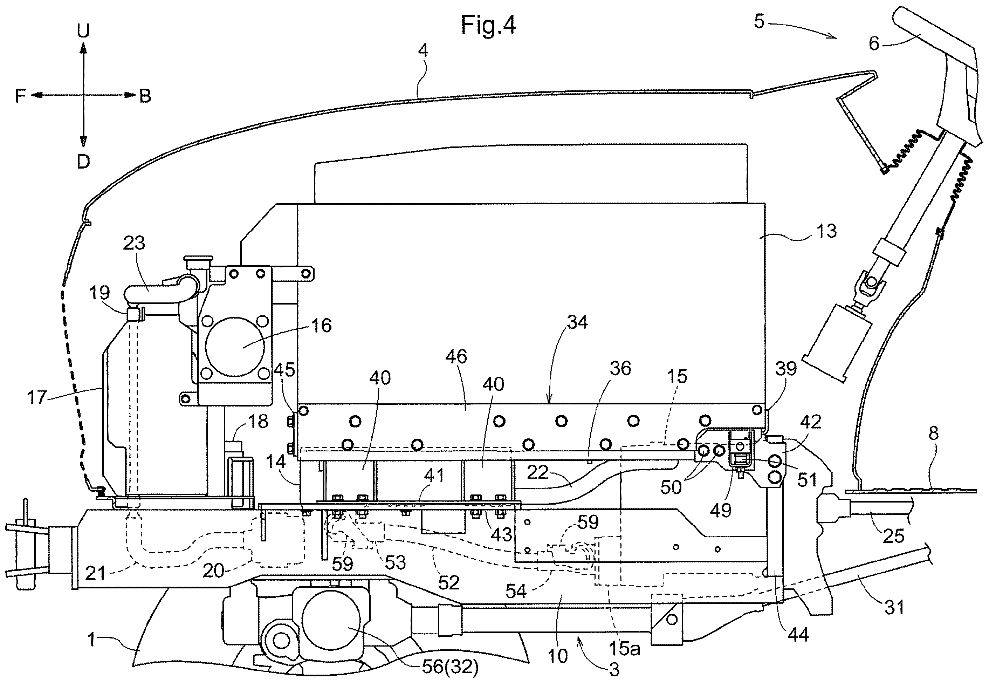

As shown in FIG. 4, a connecting portion 16 is provided in a front left portion of the battery 13, and a charger (not shown) of an external power source (not shown) is connected to the connecting portion 16 to charge the battery 13 with power supplied from the external power source via the connecting portion 16. Power is supplied from the battery 13 to the inverter 14, and the DC power supplied from the battery 13 is converted to AC power in the inverter 14 and supplied to the motor 15 to drive the motor 15.

As shown in FIGS. 2 and 4, a DC-DC converter 17, a battery 18, a radiator 19, a water pump 20, and the like are provided on front portions of the main frames 10. The battery 13, the inverter 14, the connecting portion 16, the DC-DC converter 17, the battery 18, the radiator 19, and the like are covered by the hood 4.

With this configuration, the tractor includes the battery 13 and the hood housing the battery 13.

Power is supplied from the battery 13 to the DC-DC converter 17 and the voltage is reduced to 12 V in the DC-DC converter 17. The power whose voltage has been reduced to 12 V is supplied to the battery 13, and then supplied from the battery 13 to the battery 18. Various devices (not shown) included in the tractor operate with the power with the voltage of 12 V supplied from the battery 18.

When the water pump 20 operates, cooling water generated in the radiator 19 is supplied to the water pump 20 via a pipe 21, and supplied from the water pump 20 to the inverter 14. The cooling water that has passed through the inverter 14 is supplied to the motor 15 via a pipe 22, and the cooling water that has passed through the motor 15 is supplied to the DC-DC converter 17, and returns from the DC-DC converter 17 to the radiator 19 via a pipe 23.

### (Configuration of Transmission System for Transmission to Front Wheels and Rear Wheels)

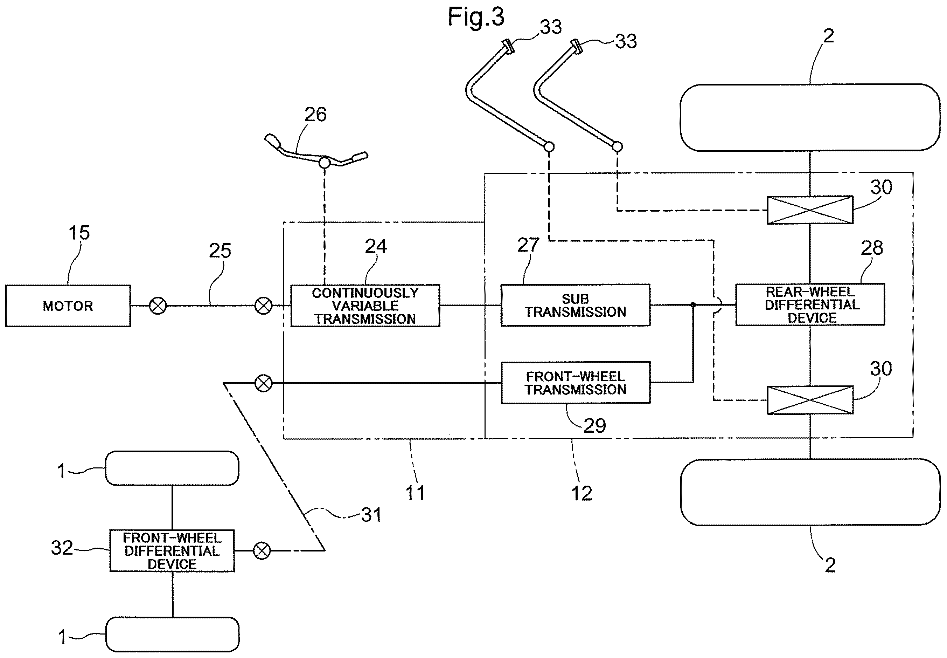

As shown in FIGS. 1 and 3, a hydraulic continuously variable transmission 24 is housed in the continuously variable transmission case 11, and motive power is transmitted from the motor 15 to the continuously variable transmission 24 via a transmission shaft 25. The continuously variable transmission 24 is capable of changing the speed of forward and rearward movements in a stepless manner, and is operated via a gearshift pedal 26 (see FIG. 2) provided on the floor section 8.

A sub transmission 27, a rear-wheel differential device 28, a front-wheel transmission 29, and right and left brakes 30 are housed in the transmission case 12. Motive power is transmitted from the continuously variable transmission 24 to the sub transmission 27, and transmitted from the sub transmission 27 to the rear wheels 2 via the rear-wheel differential device 28.

Motive power diverging between the sub transmission 27 and the rear-wheel differential device 28 is transmitted to the front-wheel transmission 29, transmitted from the front-wheel transmission 29 to a front-wheel differential device 32 via a transmission shaft 31, and then transmitted from the front-wheel differential device 32 to the front wheels 1.

When the front wheels 1 are operated to be within the ranges of right and left set angles from a straight travel position, the front wheels 1 are driven by the front-wheel transmission 29 at the same speed as the speed of the rear wheels 2. When the front wheels 1 are steered rightward or leftward past the right or left set angle, the front wheels 1 are driven by the front-wheel transmission 29 at a speed higher than the speed of the rear wheels 2.

With this configuration, the tractor includes: the motor 15 that operates with power supplied from the battery 13 and drives the front wheels 1 (travel device) and the rear wheels 2 (travel device); and the front wheels 1 (travel device) and the rear wheels 2 (travel device) driven by the motor 15.

The right brake 30 is provided on a transmission system for transmission from the rear-wheel differential device 28 to the right rear wheel 2, and the left brake 30 is provided on a transmission system for transmission from the rear-wheel differential device 28 to the left rear wheel 2. A right brake pedal 33 that can operate the right brake 30 and a left brake pedal 33 that can operate the left brake 30 are provided in a left front portion 8b of the floor section 8 (see FIG. 2).

It is possible to make a turn with a small turning radius by stepping on the right (left) brake pedal 33 corresponding to the center of turning when making a right turn (left turn) to apply the right (left) brake 30.

### (Configuration of Support Frame Supporting Battery)

As shown in FIGS. 4 to 7, a support frame 34 is attached to the main frames 10, and the battery 13 is placed on and coupled to the support frame 34.

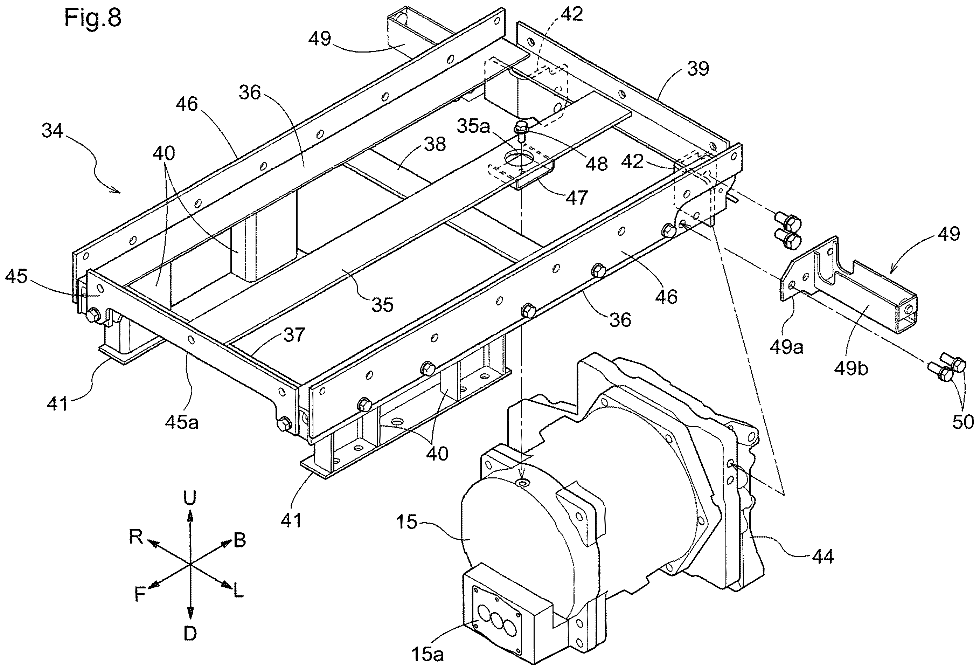

As shown in FIGS. 8 to 11, the support frame 34 includes front-rear frames 35 and 36 (corresponding to base portions), left-right frames 37, 38, and 39 (corresponding to base portions), right and left leg portions 40, right and left coupling plates 41, right and left brackets 42, upright portions 45 and 46, and the like.

The front-rear frames 35 and 36 are angle bar members extending along the front-rear direction. The left-right frame 37 is a flat plate member extending along the left-right direction. The left-right frames 38 and 39 are angle bar members extending along the left-right direction. The front-rear frame 35 and the right front-rear frame 36 are spaced apart from each other in the left-right direction. Also, the front-rear frame 35 and the left front-rear frame 36 are spaced apart from each other in the left-right direction. Accordingly, the front-rear frame 35, the right front-rear frame 36, and the left front-rear frame 36 are spaced apart from each other in the left-right direction. The left-right frame 37, the left-right frame 38, and the left-right frame 39 are spaced apart from each other in the front-rear direction. The front-rear frames 35 and 36 are coupled to the left-right frames 37, 38, and 39. Accordingly, the support frame 34 (the front-rear frames 35 and 36 and the left-right frames 37, 38, and 39) has a lattice shape in a plan view.

Two channel-shaped leg portions 40 are coupled to a front portion of the right front-rear frame 36. A coupling plate 41 extending in the front-rear direction is coupled to lower portions of the two leg portions 40. Two channel-shaped leg portions 40 are coupled to a front portion of the left front-rear frame 36. A coupling plate 41 extending in the front-rear direction is coupled to lower portions of the two leg portions 40. The right bracket 42 is coupled to a rear portion of the right front-rear frame 36, and the left bracket 42 is coupled to a rear portion of the left front-rear frame 36.

The upright portion 45 having a flat plate shape is couped to the left-right frame 37 with bolts and extends upward from the left-right frame 37. The right upright portion 46 having a flat plate shape is couped to the right front-rear frame 36 with bolts. Also, the left upright portion 46 having a flat plate shape is couped to the left front-rear frame 36 with bolts. Accordingly, the left and right upright portions 46 extend upward from the left and right front-rear frames 36.

### (Support Frame Support Structure of Main Frame)

As shown in FIGS. 4 to 7, a right support member 43 having a flat plate shape is couped to a front upper portion of the right main frame 10 along the front-rear direction. Also, a left support member 43 having a flat plate shape is couped to a front upper portion of the left main frame 10 along the front-rear direction. Agear case 44 is coupled to the right and left main frames 10 along the left-right direction.

The right leg portions 40 and the right coupling plate 41 of the support frame 34 are coupled to the right support member 43 with bolts, and the left leg portions 40 and the left coupling plate 41 of the support frame 34 are coupled to the left support member 43 with bolts. The right bracket 42 of the support frame 34 is coupled to a right portion of the gear case 44 with bolts, and the left bracket 42 of the support frame 34 is coupled to a left portion of the gear case 44 with bolts.

As described above, the support frame 34 is attached to the main frames 10, and the front-rear frames 36 of the support frame 34 are located above upper ends of the main frames 10 and slightly spaced apart therefrom.

### (Battery Supporting State of Support Frame)

As shown in FIGS. 4 to 7, the battery 13 is placed on the front-rear frames 35 and 36 and the left-right frames 37, 38, and 39 of the support frame 34, and an outer periphery of a lower portion of the battery 13 is surrounded by the upright portions 45 and 46 of the support frame 34.

A lower front portion of the battery 13 is coupled to the upright portion 45 with bolts, a lower right portion and a lower left portion of the battery 13 are coupled to the upright portions 46 with bolts, and a lower rear portion of the battery 13 is coupled to the left-right frame 39 with bolts to couple the battery 13 to the support frame 34.

With this configuration, the tractor includes the support frame 34 that is attached to the main frames 10 and on which the battery 13 is placed to be supported by the main frames 10.

The support frame 34 includes the plurality of front-rear frames 35 and 36 extending along the front-rear direction and spaced apart from each other in the left-right direction and the plurality of left-right frames 37, 38, and 39 extending along the left-right direction and spaced apart from each other in the front-rear direction.

The support frame 34 includes the front-rear frames 35 and 36 (base portions) and the left-right frames 37, 38, and 39 (base portions) on which the battery is placed and the upright portions 45 and 46 extending upward from the front-rear frames 35 and 36 (base portions) and the left-right frames 37, 38, and 39 (base portions) and surrounding the outer periphery of the lower portion of the battery 13.

### (Motor Support Structure)

As shown in FIGS. 8, 9, and 10, a coupling portion 47 is provided in a rear portion (between the left-right frame 38 and the left-right frame 39) of the front-rear frame 35 of the support frame 34.

The coupling portion 47 is formed by bending a plate member into a channel shape, and is provided on the support frame 34 by being coupled to a lower surface of the front-rear frame 35 of the support frame 34 in such a manner as to protrude downward from the front-rear frame 35 of the support frame 34.

A coupling bolt 48 is inserted into an opening in the coupling portion 47, and a portion of the front-rear frame 35 of the support frame 34 above the coupling portion 47 includes an opening 35a. A worker can fasten the coupling bolt 48 and remove the coupling bolt 48 with a tool such as a wrench by inserting the tool into the opening 35a of the front-rear frame 35.

As shown in FIGS. 4, 5, and 7 to 10, the motor 15 is disposed under the rear portion (between the left-right frames 38 and 39) of the front-rear frame 35 of the support frame 34 and between the right and left main frames 10. The motor 15 is coupled to the coupling portion 47 with the coupling bolt 48, and a rear portion of the motor 15 is coupled to the gear case 44 with bolts.

With this configuration, the coupling portion 47 that protrudes downward and to which the motor 15 is coupled is provided on the support frame 34, and the motor 15 is supported by the support frame 34 by being suspended from the support frame 34. A portion of the support frame 34 above the coupling portion 47 includes the opening 35a that exposes the coupling portion 47 upward, and the opening 35a is provided in the front-rear frame 35 of the support frame 34.

An upper portion of the motor 15 is coupled to the support frame 34 (coupling portion 47). The rear portion of the motor 15 is coupled to the main frames 10 via the gear case 44, and the rear portion of the motor 15 is coupled to the continuously variable transmission case 11 and the transmission case 12 via the gear case 44.

The motor 15 is located below a lower end portion of the hood 4 and the support frame 34 (front-rear frames 36) in a side view (see FIGS. 1 and 4), and the motor 15 can be seen through a gap between upper end portions of the main frames 10 and the lower end portion of the hood 4 and the support frame 34 (front-rear frames 36).

With this configuration, the tractor includes the motor 15 disposed outside the hood 4.

### (Inverter Support Structure)

As shown in FIGS. 4, 5, and 6, the inverter 14 is supported by the main frames 10 by being coupled to the right and left support members 43 with bolts, and is located at a position next to the motor 15 in the front-rear direction and under a front portion (between the left-right frames 37 and 38) of the support frame 34.

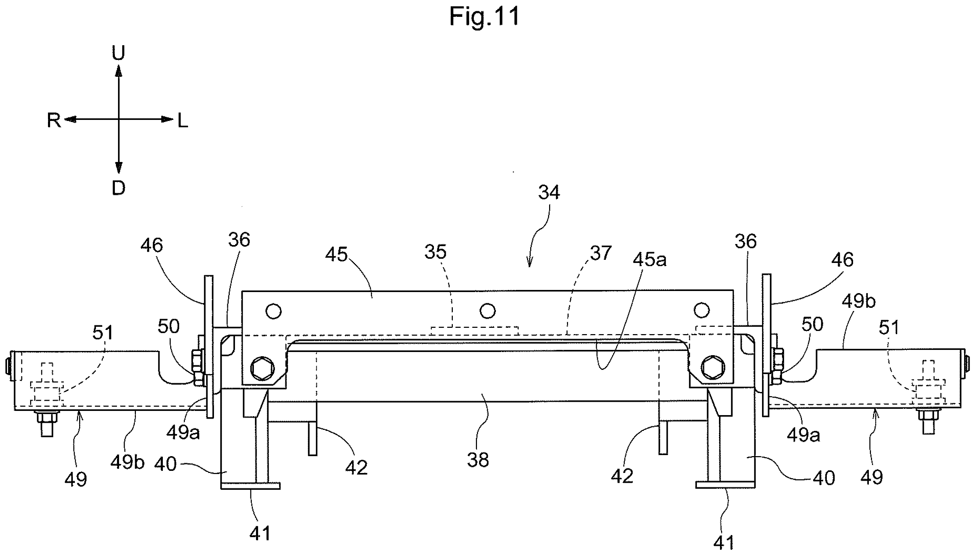

As shown in FIGS. 8 and 11, a lower portion 45a of the upright portion 45 (corresponding to a portion of the support frame 34 adjacent to the inverter 14) is recessed upward, and the upright portion 45 has a gate shape in a front view.

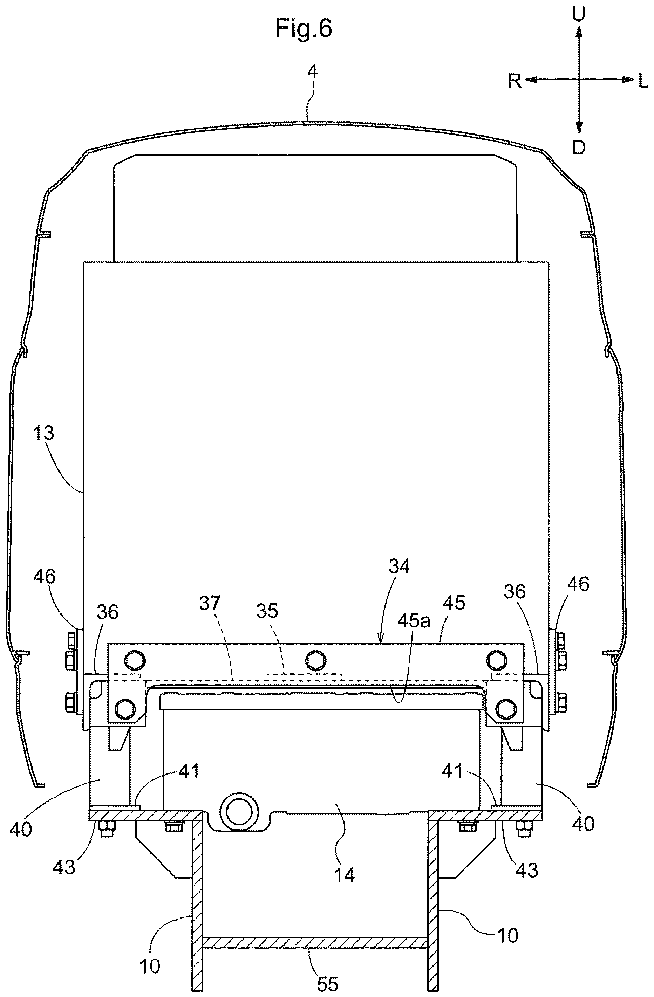

When the DC-DC converter 17, the battery 18, the radiator 19, and the like are removed, the worker can see the inverter 14 from the front side through a region under the lower portion 45a of the upright portion 45 as shown in FIG. 6.

In the state where the DC-DC converter 17, the battery 18, the radiator 19, and the like are removed, the worker can remove the inverter 14 from the main frames 10 by removing the bolts coupling the inverter 14 to the support members 43 and moving the inverter 14 forward along the horizontal direction through the region under the lower portion 45a of the upright portion 45.

After maintenance of the inverter 14 or the like is finished, the worker can place the inverter 14 on the support members 43 by moving the inverter 14 rearward along the horizontal direction from a position in front of the main frames 10 through the region under the lower portion 45a of the upright portion 45 and couple the inverter 14 to the support members 43 with bolts.

With this configuration, the inverter 14 that supplies power from the battery 13 to the motor 15 is provided next to the motor 15 under the support frame 34.

The portion (upright portion 45) of the support frame 34 adjacent to the inverter 14 is recessed upward to allow movement of the inverter 14 in the horizontal direction.

The portion (upright portion 45) of the support frame 34 adjacent to the inverter 14 is a portion of the support frame 34 located on a side opposite to the motor 15 with respect to the inverter 14.

### (Floor Section Support Structure of Support Frame)

As shown in FIGS. 1 and 2, the driving section 5 and the floor section 8 of the driving section 5 are provided behind the battery 13 and the support frame 34. A right front portion 8a and the left front portion 8b of the floor section 8 extend forward and diagonally upward to positions adjacent to right rear portions and left rear portions of the battery 13 and the support frame 34.

As shown in FIGS. 8 to 11, right and left floor frames 49 are provided. Each floor frame 49 includes a base plate portion 49a having a flat plate shape and a support portion 49b having a channel shape and coupled to the base plate portion.

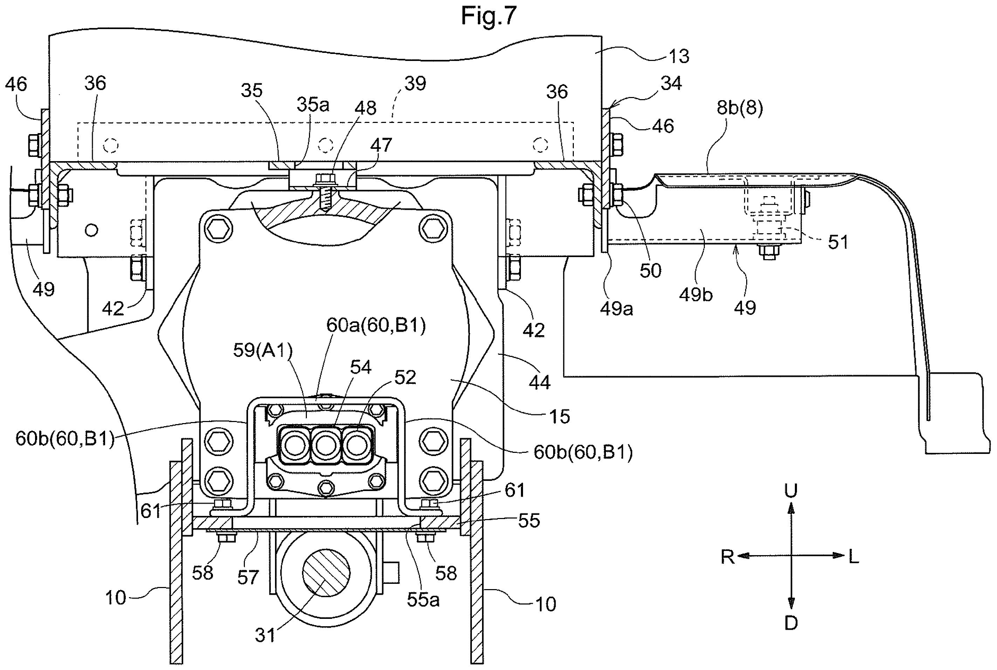

The base plate portions 49a of the right and left floor frames 49 are coupled to a right rear portion and a left rear portion of the support frame 34 (front-rear frames 36) with bolts 50. As shown in FIG. 7, the right front portion 8a and the left front portion 8b of the floor section 8 are supported by the support portions 49b of the right and left floor frames 49 via anti-vibration members 51. The floor frames 49 can be removed from the support frame 34 (front-rear frames 36) by removing the bolts 50.

With this configuration, the tractor includes the right and left floor frames 49 capable of supporting the right front portion 8a and the left front portion 8b of the floor section 8, and the right and left floor frames 49 are attachable to and detachable from the right rear potion and the left rear portion of the support frame 34.

### (Structure Relating to Harness Connected to Inverter and Motor)

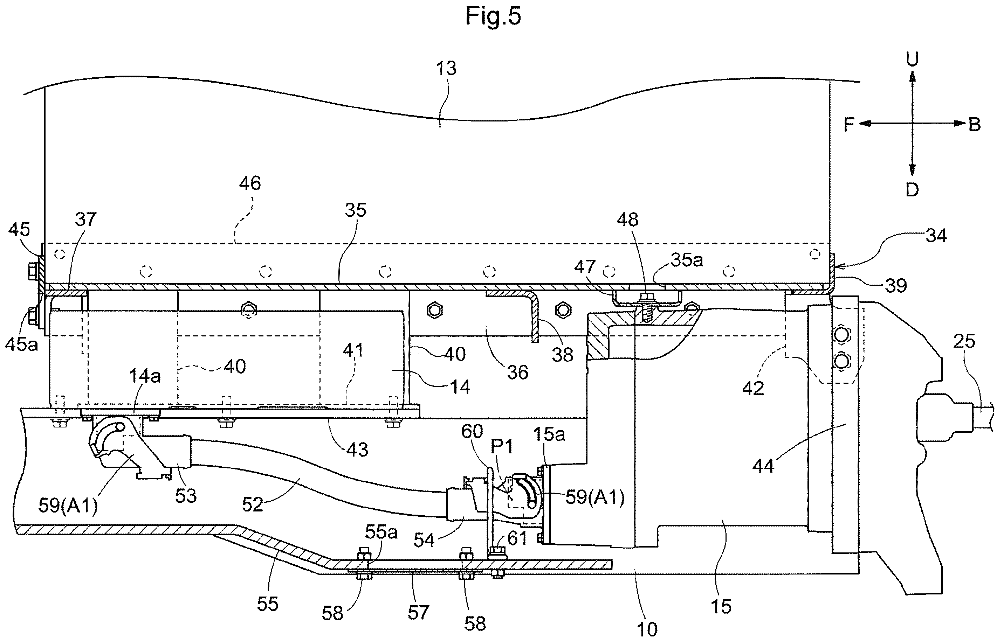

As shown in FIGS. 4 and 5, the tractor includes a harness 52, and a connector 53 is provided at a front end portion of the harness 52, and the connector 53 is connected to a terminal 14a provided in a front lower portion of the inverter 14. A connector 54 is provided at a rear end portion of the harness 52, and the connector 54 is connected to a terminal 15a provided in a front portion of the motor 15.

As shown in FIGS. 5, 6, and 7, the harness 52, the connectors 53 and 54, the terminal 14a of the inverter 14, and the terminal 15a of the motor 15 are disposed between the right and left main frames 10 in such a manner as to overlap the right and left main frames 10 in a side view. A cover 55 having a flat plate shape is coupled to lower portions of the right and left main frames 10 in such a manner as to extend between front end portions of the main frames 10 and a position under the terminal 15a of the motor 15.

As shown in FIGS. 1 and 4, a front axle case 56 supporting the front wheels 1 is supported by a front portion of the cover 55, and the transmission shaft 31 (see FIG. 3) extends forward under the cover 55 and is connected to the front-wheel differential device 32 (see FIG. 3) housed in the front axle case 56. The water pump 20 described above is attached to an upper surface of the front portion of the cover 55.

As shown in FIGS. 5 and 7, an opening 55a for cleaning and inspection is provided in a portion of the cover 55 between the motor 15 and the front axle case 56 (between the connectors 53 and 54). A covering 57 having a flat plate shape is provided, and the opening 55a of the cover 55 is closed with the covering 57 by attaching the covering 57 to the cover 55 with bolts 58. It is possible to remove the covering 57 from the cover 55 by removing the bolts 58 to open the opening 55a of the cover 55.

With this configuration, DC power supplied from the battery 13 is converted to AC power in the inverter 14, and then supplied from the inverter 14 to the motor 15 via the harness 52. Thus, the tractor includes the harness 52 for supplying power from the battery 13 to the motor 15. The tractor includes the connector 54 provided at an end portion of the harness 52 and connected to the motor 15.

The cover 55 covering the harness 52, the connectors 53 and 54, the terminal 14a of the inverter 14, and the terminal 15a of the motor 15 is provided under the harness 52 and the connectors 53 and 54.

The cover 55 includes the opening 55a for cleaning and inspection. The covering 57 is attached to the cover 55 to close the opening 55a, and the covering 57 is removable from the cover 55.

### (Configuration Relating to Lock Member for Connector of Harness)

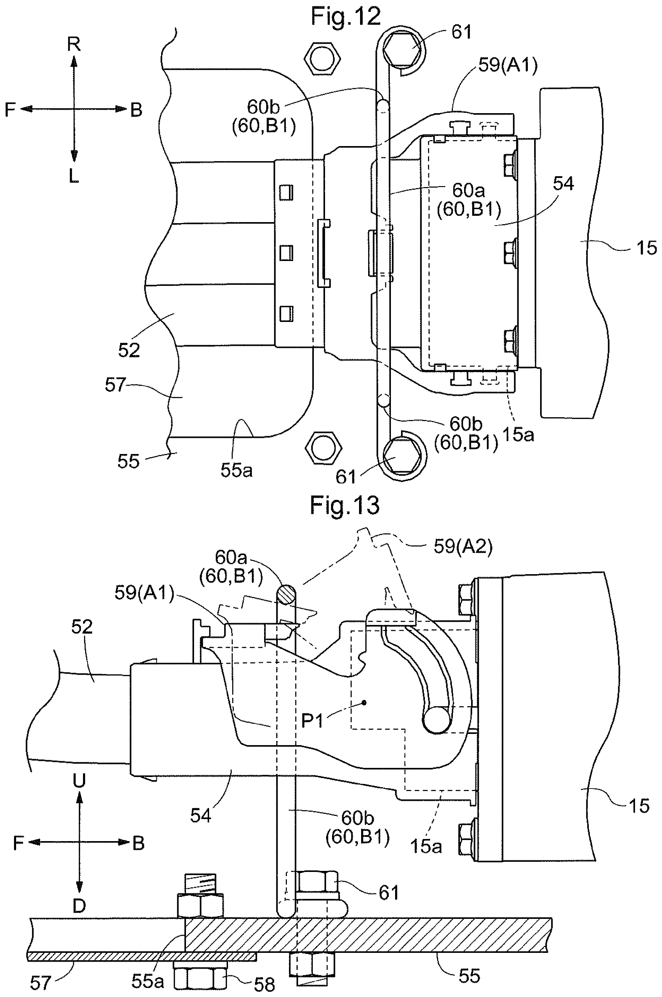

As shown in FIGS. 12 and 13, a lock member 59 is provided on the connector 54 on the upper side of the connector 54. As shown in FIGS. 5 and 7, the worker can see the connector 54 and the lock member 59 through the gap between the lower end portion of the hood 4 and the upper end portions of the main frames 10 by looking diagonally downward from positions above right and left sides of the body 3.

The lock member 59 is supported by the connector 54 in such a manner as to be pivotable about an axis P1 extending along the left-right direction and is artificially operable between a retaining position A1 at which the lock member retains connection between the connector 54 and the terminal 15a of the motor 15 and a release position A2 at which the lock member allows the connector 54 to be separated from the terminal 15a of the motor 15.

The retaining position A1 is set to a position at which the lock member is substantially in contact with an upper portion of the connector 54 and that is spaced apart from the motor 15 further forward than the release position A2 is. The release position A2 is set to a position that is spaced apart from the connector 54 further upward than the retaining position A1 is and is closer to the motor 15 than the retaining position A1 is.

When the worker connects the connector 54 to the terminal 15a of the motor 15, the worker connects the connector 54 to the terminal 15a of the motor 15 with the lock member 59 operated to the release position A2, and then operates the lock member 59 to the retaining position A1.

When the worker removes the connector 54 from the terminal 15a of the motor 15, the worker operates the lock member 59 from the retaining position A1 to the release position A2, and then moves the connector 54 forward from the terminal 15a of the motor 15 to remove the connector.

As shown in FIGS. 4 and 5, a lock member 59 is provided on the connector 53 in the same manner as the connector 54, on the lower side of the connector 53. The state shown in FIG. 5 is a state where the lock member 59 on the connector 53 is operated to the retaining position A1, and the lock member 59 can be operated to the release position A2 by moving the lock member 59 downward and forward.

With this configuration, the tractor includes the lock member 59 artificially operable between the retaining position A1 at which the lock member retains connection between the connector 54 and the motor 15 and the release position A2 at which the lock member allows the connector 54 to be separated from the motor 15.

The lock member 59 is provided on the upper side of the connector 54, and the release position A2 is set to a position spaced apart from the connector 54 further than the retaining position A1 is.

### (Structure Relating to Restriction Member for Connector Connected to Terminal of Motor)

As shown in FIGS. 7, 12, and 13, a restriction member 60 is provided for the connector 54. The restriction member 60 includes a first portion 60a extending along a horizontal direction and a pair of second portions 60b extending in the same direction that is the upward direction or the downward direction from an end portion and another end portion of the first portion 60a.

The state shown in FIGS. 7, 12, and 13 is a state where lower portions of the second portions 60b of the restriction member 60 are attached to the cover 55 with bolts 61 (corresponding to fixing members) and the restriction member 60 is attached to a restricting position B1.

In the state where the restriction member 60 is attached to the restricting position B1, the cover 55 covering the restriction member 60 is under the restriction member 60, and the restriction member 60 is located between the right and left main frames 10, overlapping the right and left main frames 10 in a side view.

In the state where the restriction member 60 is attached to the restricting position B1, the first portion 60a of the restriction member 60 extends along the left-right direction above the connector 54 and the lock member 59 operated to the retaining position A1 across the entire widths of the connector 54 and the lock member 59 operated to the retaining position A1. The second portions 60b of the restriction member 60 extend along the up-down direction at right and left positions laterally outward of the connector 54 and the lock member 59 operated to the retaining position A1.

In the state where the restriction member 60 is attached to the restricting position B1, the first portion 60a of the restriction member 60 is on an operation path of the lock member 59 between the retaining position A1 and the release position A2. Therefore, even if the lock member 59 moves from the retaining position A1 toward the release position A2, the lock member 59 comes into contact with the restriction member 60 (the first portion 60a) and the movement of the lock member 59 is blocked, and accordingly, the lock member 59 cannot reach the release position A2.

The worker can remove the restriction member 60 from the cover 55 (the restricting position B1) by removing the bolts 61 with a tool (not shown) such as a wrench. When the restriction member 60 is removed from the cover 55 (the restricting position B1), the worker can operate the lock member 59 from the retaining position A1 to the release position A2 and remove the connector 54 from the terminal 15a of the motor 15.

With this configuration, the tractor includes the restriction member 60 provided on the operation path of the lock member 59 between the retaining position A1 and the release position A2 to hinder the lock member 59 from being operated from the retaining position A1 to the release position A2, and the restriction member 60 is removable. The restriction member 60 extends across the entire width of the lock member 59 operated to the retaining position A1. The bolts 61 (fixing members) for attaching the restriction member 60 are provided, and the restriction member 60 can be removed by removing the bolts 61 (fixing members) with a tool.

The restriction member 60 includes the first portion 60a extending along the horizontal direction and the pair of second portions 60b extending in the same direction that is the upward direction or the downward direction from an end portion and another end portion of the first portion 60a. The first portion 60a is located above the connector 54, the second portions 60b are located laterally outward of the connector 54, and the lower portions of the second portions 60b are attached to the cover 55.

### (First Variation of the Invention)

A configuration is also possible in which the coupling portion 47 is provided on one of the front-rear frames 36 of the support frame 34 and the opening 35a is provided in a portion of the front-rear frame 36 of the support frame 34 above the coupling portion 47. A configuration is also possible in which a plurality of coupling portions 47 are provided on the front-rear frames 35 and 36 and the left-right frames 37, 38, and 39 of the support frame 34 and openings 35a are provided in portions of the front-rear frames 35 and 36 and the left-right frames 37, 38, and 39 above the coupling portions 47.

With this configuration, the opening 35a is provided in any of the plurality of front-rear frames 35 and 36 and the plurality of left-right frames 37, 38, and 39.

### (Second Variation of the Invention)

The coupling portion 47 may be omitted.

In this configuration, the motor 15 can be directly coupled to the support frame 34 (the front-rear frames 35 and 36 and the left-right frames 37, 38, and 39) with the coupling bolt 48. The motor 15 can be supported by the support frame 34 (the front-rear frames 35 and 36 and the left-right frames 37, 38, and 39) by being suspended with use of a suspension member (not shown).

### (Third Variation of the Invention)

A configuration is also possible in which the gear case 44 coupled to the right and left main frames 10 is disposed in front of the motor 15, the upper portion of the motor 15 is coupled to the coupling portion 47, and a front portion of the motor 15 is coupled to the main frames 10 via the gear case 44.

A configuration is also possible in which the positional relationship between the inverter 14 and the motor 15 is reversed, the motor 15 is disposed under the front portion of the support frame 34, and the inverter 14 is disposed under the rear portion of the support frame 34.

### (Fourth Variation of the Invention)

The upright portions 45 and 46 of the support frame 34 may be omitted.

In this configuration, the battery 13 can be placed on the support frame 34 and coupled to the front-rear frames 35 and 36 and the left-right frames 37, 38, and 39 of the support frame 34 with bolts.

### (Fifth Variation of the Invention)

A configuration is also possible in which lower portions of the upright portions 46 and lower portions of the front-rear frames 36 of the support frame 34 are recessed upward.

In this configuration, the upright portions 46 and the front-rear frames 36 of the support frame 34 are portions of the support frame 34 adjacent to the inverter 14.

It is possible to remove the inverter 14 from the main frames 10 by removing the right or left leg portions 40 and the coupling plate 41 of the support frame 34 without removing the DC-DC converter 17, the battery 18, the radiator 19, and the like, and by moving the inverter 14 rightward or leftward along the horizontal direction through a region under the lower portion of the upright portion 46 and the lower portion of the front-rear frame 36.

### (Sixth Variation of the Invention)

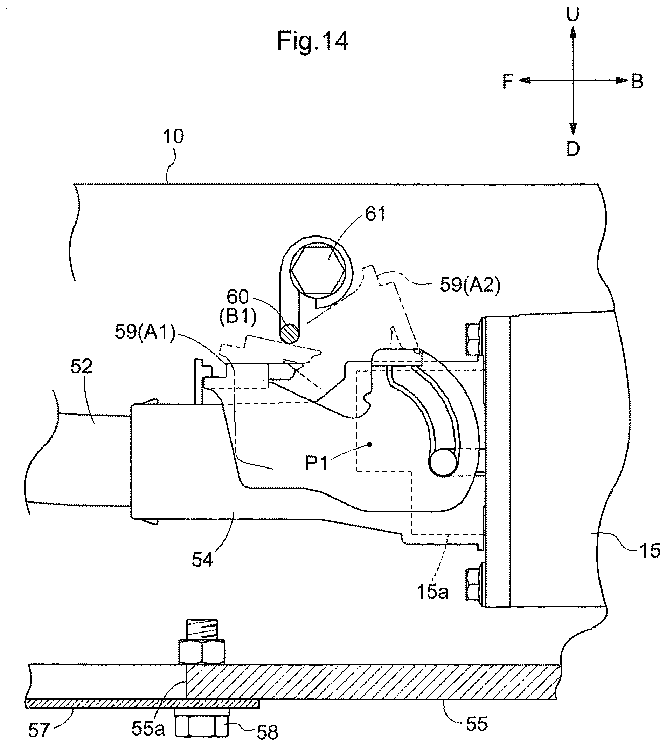

As shown in FIG. 14, the restriction member 60 may also have a straight bar shape.

In this configuration, the restriction member 60 is attached to the restricting position B1 by attaching a right end portion and a left end portion of the restriction member 60 to the right and left main frames 10 with the bolts 61.

With this configuration, the harness 52, the connectors 53 and 54, the terminal 14a of the inverter 14, and the terminal 15a of the motor 15 are disposed between the right and left main frames 10 in such a manner as to overlap the right and left main frames 10 in a side view, and the restriction member 60 is attached in such a manner as to extend between the left and right main frames 10.

### (Seventh Variation of the Invention)

The restriction member 60 shown in FIGS. 7, 12, and 13 and the restriction member 60 of the sixth variation of the invention may also be configured as described below, rather than being completely removed from the cover 55 (the main frames 10).

The restriction member 60 is configured such that the lock member 59 can be operated from the retaining position A1 to the release position A2 when an end portion (one second portion 60b) of the restriction member 60 is removed and the position of the restriction member 60 is changed with the other end portion (the other second portion 60b) of the restriction member 60 kept attached to the cover 55 (the main frames 10). In other words, the restriction member 60 can be removed from the operation path of the lock member 59.

In this configuration, the restriction member 60 is removed from the restricting position B1 by changing the position of the restriction member 60 from the restricting position B1. Since the other end portion (the other second portion 60b) of the restriction member 60 is kept attached to the cover 55 (the main frames 10), the restriction member 60 will not be lost.

### (Eighth Variation of the Invention)

A configuration is also possible in which the positional relationship between the retaining position A1 and the release position A2 of the lock member 59 shown in FIGS. 12 and 13 is reversed, and the release position A2 is set to a position at which the lock member is substantially in contact with the upper portion of the connector 54, and the retaining position A1 is set to a position that is spaced apart from the connector 54 further upward than the release position A2 is.

**In** this configuration, the restriction member 60 can be configured to be located between the connector 54 and the lock member 59 operated to the retaining position A1 when the restriction member 60 is attached to the restricting position B1.

**In** this case, even if the lock member 59 moves from the retaining position A1 toward the release position A2 to be closer to the connector 54, the lock member 59 comes into contact with the restriction member 60 and the movement of the lock member 59 is blocked, and accordingly, the lock member 59 cannot reach the release position A2.

### (Ninth Variation of the Invention)

The lock member 59 shown in FIGS. 12 and 13 may be provided on the lower side of the connector 54.

The lock members 59 of the sixth through eighth variations of the invention may be provided on the lower side of the connector 54.

In this configuration, the restriction member 60 can be provided on the lower side of the connector 54 and the lock member 59 as shown in the sixth variation of the invention and FIG. 14.

### (Tenth Variation of the Invention)

The lock member 59 shown in FIGS. 12 and 13 may also be provided on the motor 15.

The lock members 59 of the sixth through ninth variations of the invention may also be provided on the motor 15.

**In** this configuration, when the connector 54 is removed from the terminal 15a of the motor 15, the lock member 59 remains on the motor 15.

### (Eleventh Variation of the Invention)

The lock member 59 shown in FIGS. 12 and 13 may also be configured to be slid along a horizontal direction or the up-down direction between the retaining position A1 and the release position A2. The lock members 59 of the sixth through tenth variations of the invention may also be configured to be slid along a horizontal direction or the up-down direction between the retaining position A1 and the release position A2.

### (Twelfth Variation of the Invention)

The configuration of the lock member 59 shown in FIGS. 12 and 13 may also be applied to the lock member 59 of the connector 53 (see FIG. 5) connected to the terminal 14a of the inverter 14. The configurations of the lock members 59 of the sixth through eleventh variations of the invention may also be applied to the lock member 59 of the connector 53 (see FIG. 5) connected to the terminal 14a of the inverter 14.

### (Thirteenth Variation of the Invention)

The tractor may include a crawler device (not shown) as a travel device instead of the rear wheels 2.

The tractor may include crawler devices (not shown) as travel devices instead of the front wheels 1 and the rear wheels 2.

### Industrial Applicability

The present invention is applicable not only to a tractor but also to other electric work vehicles such as an electric cart, a transport vehicle, and the like.

### Description of Reference Signs

- 1: front wheel (travel device)
- 2: rear wheel (travel device)
- 4: hood
- 10: main frame
- 13: battery
- 15: motor
- 52: harness
- 54: connector
- 55: cover
- 55a: opening
- 57: covering
- 59: lock member
- 60: restriction member
- 60a: first portion
- 60b: second portion
- 61: bolt (fixing member)
- A1: retaining position
- A2: release position

## Claims

1. An electric work vehicle comprising:
- a hood housing a battery;
- a motor outside the hood;
- a travel device configured to be driven by the motor;
- a harness configured to supply power from the battery to the motor;
- a connector provided at an end portion of the harness and configured to be connected to the motor;
- a lock member artificially operable between a retaining position at which the lock member retains connection between the connector and the motor and a release position at which the lock member allows the connector to be separated from the motor; and
- a restriction member provided on an operation path of the lock member between the retaining position and the release position to hinder the lock member from being operated from the retaining position to the release position,
wherein the restriction member is removable.

2. The electric work vehicle according to claim 1, further comprising:
a fixing member for attaching the restriction member,
wherein the restriction member is removable by removing the fixing member with a tool.

3. The electric work vehicle according to claim 1 or 2, wherein the release position is set to a position spaced apart from the connector further than the retaining position is.

4. The electric work vehicle according to any one of claims 1 to 3, wherein the restriction member extends across an entire width of the lock member operated to the retaining position.

5. The electric work vehicle according to any one of claims 1 to 4, wherein
- the restriction member includes a first portion extending along a horizontal direction and a pair of second portions extending in the same direction that is an upward direction or a downward direction from an end portion and another end portion of the first portion, and
- the first portion is located above or below the connector, and the second portions are located laterally outward of the connector.

6. The electric work vehicle according to claim 5, further comprising:
a cover that is provided under the harness and the connector and covers the harness and
the connector, wherein
- the lock member is located above the connector, and
- the first portion is located above the connector, and lower portions of the second portions are attached to the cover.

7. The electric work vehicle according to claim 6, wherein
- the cover includes an opening for cleaning and inspection,
- the opening is closed with a covering attached to the cover, and
- the covering is removable from the cover.

8. The electric work vehicle according to any one of claims 1 to 7, further comprising:
left and right main frames extending along a front-rear direction, wherein
- the connector and the lock member are between the left and right main frames and overlap the left and right main frames in a side view, and
- the restriction member is attached in such a manner as to extend between the left and right main frames.
